**Europäisches Patentamt**

**European Patent Office**

**Office européen des brevets**

(11) Veröffentlichungsnummer: **0 209 860 B1**

(12) **EUROPÄISCHE PATENTSCHRIFT**

(45) Veröffentlichungstag der Patentschrift: **13.01.93**

(21) Anmeldenummer: **86109873.9**

(22) Anmeldetag: **18.07.86**

(51) Int. Cl.⁵: **G01N 21/47**, G01J 3/50

54 **Remissionsmessgerät zur berührungslosen Messung.**

30 Priorität: **25.07.85 DE 3526553**

43 Veröffentlichungstag der Anmeldung:
**28.01.87 Patentblatt 87/05**

45 Bekanntmachung des Hinweises auf die
Patenterteilung:
**13.01.93 Patentblatt 93/02**

84 Benannte Vertragsstaaten:
**AT CH DE FR GB IT LI SE**

56 Entgegenhaltungen:

| | |
|---|---|
| DE-A- 1 902 101 | FR-A- 2 191 786 |
| US-A- 3 458 261 | US-A- 3 526 777 |
| US-A- 3 718 399 | US-A- 3 999 864 |
| US-A- 4 022 534 | US-A- 4 076 421 |
| US-A- 4 379 225 | |

73 Patentinhaber: **Firma Carl Zeiss**

**W-7920 Heidenheim (Brenz)(DE)**

84 Benannte Vertragsstaaten:
**AT CH DE FR GB IT LI SE**

73 Patentinhaber: **CARL ZEISS-STIFTUNG HANDELND ALS CARL ZEISS**

**W-7920 Heidenheim (Brenz)(DE)**

84 Benannte Vertragsstaaten:
**GB**

72 Erfinder: **Gerlinger, Hermann, Dr.**
**Köhlerstrasse 25**
**W-7080 Aalen-Ebnat(DE)**
Erfinder: **Hohberg, Gerhard, Dr.**
**Hornbergstrasse 13**
**W-7080 Aalen-Dewangen(DE)**

**Beschreibung**

Die vorliegende Erfindung betrifft ein Remissionsmeßgerät zur berührungslosen Messung, mit einer Lichtquelle zur Beleuchtung eines Beleuchtungsflecks auf einem Objekt, und mit einer Meßeinrichtung zur Erfassung der von einer Meßfläche auf dem Objekt remittierten Strahlung, wobei die Meßfläche kleiner als der Beleuchtungsfleck ist.

Ein Gerät dieser Art ist aus der DE-PS 16 22 484 bekannt. Bei ihm wird ein kleiner Bereich einer laufenden Bahn von einer Impulslichtquelle beleuchtet, wobei eine von der Lichtquelle beleuchtete Blende auf die Bahn abgebildet wird. Von dieser Bestrahlungsfläche (in der PS als Feldbegrenzungsbild bezeichnet) wird eine mittlere Zone auf einen Empfänger abgebildet, so daß die Meßfläche, deren remittierte Strahlung von der Meßeinrichtung erfaßt wird, kleiner als die Bestrahlungsfläche ist. Diese bekannte Anordnung hat den Nachteil, daß das Meßergebnis vom Abstand der Bahn von der Meßeinrichtung abhängig ist. Dieser Abstand ist jedoch bei vielen Maschinen, bei denen das Remissionsvermögen bzw. die Farbe von laufenden Bahnen gemessen werden soll, nicht konstant, da an denjenigen Stellen, wo eine Meßeinrichtung untergebracht werden kann, die laufende Bahn flattert.

Eine gattungsgemäße Anordnung nach der DE-AS 19 02 101 bildet mit je zwei Linsen die Lichtquelle auf das Objekt und das Objekt auf den Detektor ab. Durch telezentrischen Strahlengang wird eine gewisse Abstands-Stabilisierung des Nachweises erreicht. Die koaxiale Anordnung von Beleuchtungs- und Nachweisstrahlengang bedingt Polarisatoren zur Reflexunterdrückung und einen Strahlteiler.

Nach der US 35 26 777 liegt ebenfalls das Objekt im Fokus von Beleuchtungs- und Nachweisstrahlengang. Spezielle Blenden in beiden Strahlengängen gleichen Defokussierungseffekte aus.

Der vorliegenden Erfindung liegt daher die Aufgabe zugrunde, ein Remissionsmeßgerät zu schaffen, bei dem das Meßergebnis vom Abstand der Probe vom Meßgerät innerhalb eines Bereiches praktisch nicht beeinflußt wird, und das sehr einfach aufgebaut ist.

Die gestellte Aufgabe wird erfindungsgemäß dadurch gelöst, daß die Lichtquelle zur Erzeugung eines Parallellichtbündels im Fokus eines Kondensors angeordnet ist, wobei aufgrund der Ausdehnung der Lichtquelle die Beleuchtungsstärke auf dem Objekt nur innerhalb eines Kernbereichs (k) des Beleuchtungsflecks abstandsunabhängig ist, daß der optische Teil der Meßeinrichtung eine begrenzende Fläche und eine zwischen der begrenzenden Fläche und dem Objekt angeordnete Linse umfaßt, wodurch die Größe der Meßfläche (m) festgelegt wird, und daß die Meßfläche (m) so dimensioniert und positioniert ist, daß sie für alle innerhalb eines Intervalls liegenden Abstandsänderungen des Objekts zur Meßeinrichtung innerhalb des Kernbereichs (k) liegt.

Bei einer punktförmigen Lichtquelle (und einem abbildungsfehlerfreien Kondensor) würde das kollimierte Bündel in jeder Entfernung die gleiche Beleuchtungsstärke bewirken. Durch die endliche Größe der Lichtquelle ergibt sich eine Divergenz, die einen abstandsabhängigen Randabfall verursacht. Innerhalb eines gewissen Kernbereiches bleibt jedoch die Beleuchtungsstärke unabhängig von der Entfernung. Voraussetzung für eine abstandsunabhängige Messung ist daher, daß die Meßeinrichtung nur remittierte Strahlung aus diesem Kernbereich erfaßt, d.h. daß die Meßfläche kleiner als der Kernbereich ist. Eine weitere Voraussetzung, die auch bei der DE-PS 16 22 484 erfüllt ist, ist, daß die Apertur der Meßeinrichtung konstant ist, d.h. daß der vom Empfänger, bzw. von der Meßeinrichtung erfaßte Raumwinkel konstant ist.

Weitere vorteilhafte Ausgestaltungen der Erfindung gehen aus den Unteransprüchen und der Beschreibung zu den Figuren hervor.

Ein besonderer Vorteil der Erfindung besteht darin, daß durch die abstandsunabhängige Messung die Meßergebnisse nicht nur zur Dokumentation sondern auch unmittelbar zur Prozeßsteuerung verwendet werden können, indem z.B. bei der Papierherstellung die Zumischung oder beim Färben von Textilien der Walzenandruck verändert wird.

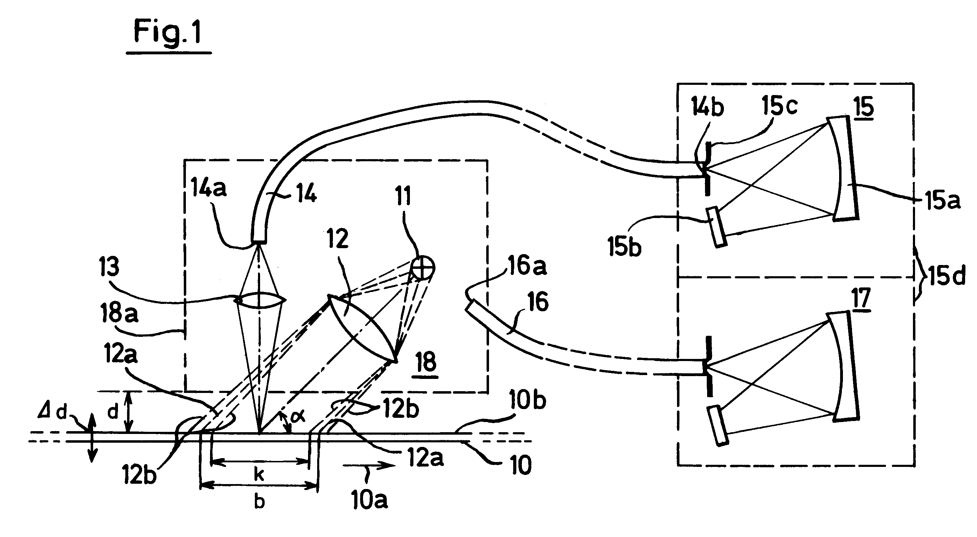

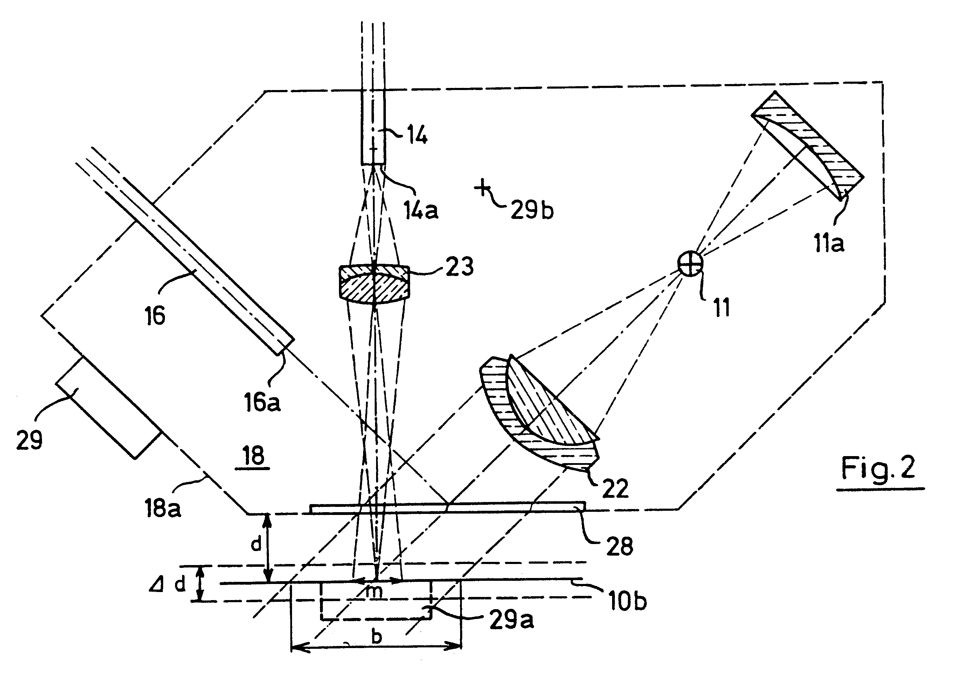

Die Erfindung wird im folgenden anhand eines in den Figuren 1 und 2 dargestellten Ausführungsbeispieles näher erläutert. Dabei zeigen

Fig. 1      eine Prinzipskizze der gesamten Meßanordnung und

Fig. 2      ein Beispiel für den optischen Aufbau der Beleuchtungs- und Meßeinrichtung.

In Figur 1 ist mit 10 ein Objekt, z.B. eine laufende Bahn einer Papier- oder Druckmaschine, bezeichnet, die in Richtung des Pfeiles 10a bewegt wird. Ihre Oberfläche 10b bewegt sich dabei im Bereich Δd um einige mm auf und ab, d.h. die Bahn flattert an denjenigen Stellen, an denen Platz für ein Meßgerät oder einen Meßkopf 18 zur Bestimmung des Remissionsvermögens bzw. der Farbwerte ist. Dieses Flattern, d.h. der um Δ d wechselnde Abstand zwischen Meßkopf 18 und Oberflache 10b des Meßobjektes, beeinflußt bei den bekannten Meßanordnungen die Remissions- bzw. Farbwerte bis zu einem Vielfachen dessen was das menschliche Auge als Differenz wahrnehmen kann.

Entsprechend der Erfindung erfolgt die Beleuchtung des für die Messung vorgesehenen Bereiches der Bahnoberfläche 10b mit einer Lichtquelle 11, die im Brennpunkt des Kondensors 12 angeordnet ist. Wenn die Lichtquelle 11 punktförmig wäre, dann würde nach dem Kondensor 12 ein exaktes Parallellichtbündel mit den Begrenzungslinien 12a entstehen (wenn man Abbildungsfehler des Kondensors vernachlässigt). Der dadurch beleuchtete Teil der Probenoberfläche 10b wird als Bestrahlungsflüche b bezeichnet. Durch die Ausdehnung der Lichtquelle ergibt sich jedoch eine Divergenz, die einen abstandsabhängigen Randabfall zwischen den mit 12b bezeichneten Linien verursacht. Innerhalb eines Kernbereiches k bleiben aber die idealen Bedingungen erfüllt, so daß in diesem Bereich die Beleuchtungsstärke der Probenoberfläche nicht vom Abstand d der Probenoberfläche 10b vom Meßkopf 18 abhängt, sondern nur vom Winkel $\alpha$ zwischen der optischen Achse der Beleuchtungseinrichtung und der Probenoberfläche. Letzterer bleibt jedoch auch bei Änderungen des Abstandes d praktisch konstant.

Das von der Bahnoberfläche 10b remittierte Licht wird zum Teil von der Meßeinrichtung erfaßt, welche aus der Linse 13 dem Lichtleiter 14 und dem Diodenzeilenspektrometer 15 besteht. Die optischen Verhältnisse für die Erfassung der remittierten Strahlung werden zusammen mit Figur 2 erläutert. Das Diodenzeilenspektrometer 15 ist z.B. aus der DE-OS 32 15 879 bekannt; es besteht aus dem holographischen Konkavgitter 15a und der Diodenzeile 15b. Im vorliegenden Fall wird durch das Ende 14b des Lichtleiters 14 der Eintrittsspalt 15c beleuchtet. Wenn der Lichtleiter aus mehreren Lichtleitfasern besteht, werden diese untereinander vor dem Spalt angeordnet. Der - in den Figuren nicht maßstäblich gezeichnete - Lichtleiter kann jedoch auch aus einer Einzelfaser bestehen.

Insbesondere wenn für die Lichtquelle 11 eine Impulslichtquelle verwendet wird, ist es notwendig, das Spektrum jedes Impulses als Vergleich aufzunehmen. Hierzu dient der Lichtleiter 16, dessen Anfangsfläche 16a z.B. in der Nähe der Lichtquelle direkt der Bestrahlung ausgesetzt wird. Der Lichtleiter 16 führt zu einem zweiten Diodenzeilenspektrometer 17. Die Auswertung der von den Spektrometern aufgenommenen Spektren und die Berechnung der Remissions- bzw. Farbwerte erfolgt in bekannter Weise.

In Figur 2 ist ein Beispiel für den optischen Aufbau der Beleuchtungs- und Meßeinrichtung ausführlicher dargestellt. Die Lichtquelle ist wieder mit 11 bezeichnet. Als Kondensor 22 wird, um insbesondere kleine chromatische Abbildungsfehler zu erreichen, ein zweilinsiges Objektiv verwendet. Die Bahnoberfläche ist wieder mit 10b bezeichnet und die auf ihr ausgeleuchtete Bestrahlungsfläche mit b. Aus energetischen Gründen wird vorzugsweise eine Kurzbogen-Entladungslampe, z.B. XBO 75 der Firma Osram, als Lichtquelle verwendet. Bei schnell bewegten Bahnen ist eine Blitzlampe, z.B. BGS 29027 der Fa. Heimann besonders gut geeignet, weil sie kurze Meßzeiten ermöglicht. Derartige Entladungslampen zeigen meist eine unregelmäßige Veränderung der Bogenposition, durch die auch das beleuchtende Bündel verändert wird. Dieser Effekt wird durch den Hohlspiegel 11a vermindert, der den Bogen in sich abbildet. Wenn der Bogen auswandert, dann wandert sein Spiegelbild gegenläufig, so daß insgesamt die Symmetrie näherungsweise erhalten bleibt.

Zwischen dem Kondensor 22 und der Probenoberfläche 10b befindet sich ein Fenster 28, das den Meßkopf 18 abschließt. An diesem Fenster wird ein Teil des Beleuchtungsbündels zwangsläufig reflektiert; dieser reflektierte Anteil wird für das Vergleichsspektrum ausgenutzt, wobei der Anfang 16a des Lichtleiters 16 so angeordnet ist, daß er einen Ausschnitt aus der Mitte des Kernbereiches k aufnimmt. Eine derartige Anordnung ist besonders vorteilhaft, wenn es auf eine möglichst hohe Meßgenauigkeit ankommt.

Auch in der Meßeinrichtung wird ein zweilinsiges Objektiv 23 verwendet, um eine möglichst gute Korrektur insbesondere der chromatischen Abbildungsfehler zu erreichen. Das Objektiv 23 muß keine scharfe Abbildung der Bahnoberfläche 10b auf die Anfangsfläche 14a des Lichtleiters 14 liefern, sondern seine wesentliche Aufgabe besteht darin, daß es zusammen mit der Eingangsfläche 14a die Größe der Meßfläche m auf der Probenoberfläche begrenzt. Diese kann durch Verändern des Abstandes des Objektives 23 von der Bahnoberfläche variiert werden. Die Meßfläche muß aber immer innerhalb des in Figur 1 mit k gekennzeichneten Kernbereiches der Bestrahlungsfläche b liegen. Die Eingangsfläche 14a kann natürlich auch durch eine andere begrenzende Fläche ersetzt werden; wichtig ist lediglich, daß die Apertur konstant ist, d.h. daß der von der Meßeinrichtung erfaßte Raumwinkel konstant und damit vom Abstand d zwischen Bahnoberfläche 10b und Beleuchtungsund Meßeinrichtung 18 unabhängig ist.

Im dargestellten Ausführungsbeispiel ist eine 45°-Geometrie realisiert, die in der Remissionsund Farbmeßtechnik gebräuchlich ist. Selbstverständlich sind auch andere Geometrien möglich. Bei der in Figur 2 ungefähr im Maßstab 1,5:1 vergrößerten Darstellung hat die Bestrahlungsfläche b Abmessungen von ca. 20 mm senkrecht zur Zeichenebene und von ca. 30 mm in der Zeichenebene. Die Meßfläche kann auf einen Durchmesser zwischen 3 und 10 mm eingestellt werden. Bei Abstandsänderungen $\Delta d$ der Bahnoberfläche von bis zu $\pm$ 4,5 mm lagen die Farbtoleranzen für eine weiße Oberfläche innerhalb von $\Delta E_{ab}^* \leq 0,3$ (nach DIN 6174).

Es ist auch möglich, eine Beleuchtungseinrichtung mit mehreren Meßeinrichtungen für verschiedene Winkel zu kombinieren, wobei jede Meßeinrichtung mit einem Spektrometer verbunden ist. Das ist vor allem für Proben mit Glanzeigenschaften vorteilhaft.

Zweckmäßigerweise werden alle Teile der Beleuchtungs- und Meßeinrichtung 18 in einem Gehäuse 18a zusammengefaßt, das über die Lichtleiter 14 und 16 mit den Spektrometern 15 und 17 verbunden ist. Letztere können dann in einem zweiten Gehäuse 15d zusammen mit der Stromversorgung für die Lichtquelle 11 untergebracht werden, so daß sie in einigem Abstand vom Ort der Messung aufgestellt werden können. Es ist außerdem vorteilhaft, das Gehäuse 18a in einer (nicht gezeichneten) Schwenkeinrichtung über dem Objekt 10, nämlich der Bahn 10 zu montieren, so daß im abgeschwenkten Zustand zur Eichung ein Farb- oder Weißstandard 29a im mittleren Abstand d vor das Fenster 28 gebracht werden kann. Dieser Standard ist um die Achse 29b schwenkbar und befindet sich, wenn er nicht benutzt wird, in der Stellung 29, wo seine Oberfläche gegen Staub etc. geschützt ist.

Das beschriebene Remissionsmeßgerät ist nicht nur zur Messung an laufenden Bahnen geeignet. Es kann vorteilhaft auch bei allen anderen Remissionsmessungen verwendet werden, bei denen es nicht möglich ist, die zu messenden Proben - wie sonst allgemein üblich - an eine Meßöffnung anzulegen. Das beschriebene Remissionsgerät eignet sich besonders gut für alle berührungslosen Messungen, z.B. auch an flüssigen Farben.

**Patentansprüche**

1. Remissionsmeßgerät zur berührungslosen Messung, mit
   - einer Lichtquelle (11) zur Beleuchtung eines Beleuchtungsflecks (b) auf einem Objekt (10), und mit
   - einer Meßeinrichtung (13,14,15) zur Erfassung der von einer Meßfläche (m) auf dem Objekt (10) remittierten Strahlung, wobei die Meßfläche (m) kleiner als der Beleuchtungsfleck (b) ist,
   dadurch gekennzeichnet,
   - daß die Lichtquelle (11) zur Erzeugung eines Parallellichtbündels im Fokus eines Kondensors (12) angeordnet ist, wobei aufgrund der Ausdehnung der Lichtquelle (11) die Beleuchtungsstärke auf dem Objekt (10) nur innerhalb eines Kernbereichs (k) des Beleuchtungsflecks abstandsunabhängig ist,
   - daß der optische Teil (13,14a) der Meßeinrichtung (13,14,15) eine begrenzende Fläche (14a) und eine zwischen der begrenzenden Fläche (14a) und dem Objekt (10) angeordnete Linse (13) umfaßt, wodurch die Größe der Meßfläche (m) festgelegt wird, und
   - daß die Meßfläche (m) so dimensioniert und positioniert ist, daß sie für alle innerhalb eines Intervalls liegenden Abstandsänderungen des Objekts (10) zur Meßeinrichtung (13,14,15) innerhalb des Kernbereichs (k) liegt.

2. Remissionsmeßgerät nach Anspruch 1, dadurch gekennzeichnet, daß die Lichtquelle (11) zusätzlich im Fokus eines rückwärtigen Hohlspiegels (11a) liegt.

3. Remissionsmeßgerät nach Anspruch 1 oder 2, dadurch gekennzeichnet, daß die begrenzende Fläche (14a) der Anfang eines Lichtleiters (14) ist und an diesem ein spektral selektiver Lichtdetektor (15) angeschlossen ist.

4. Remissionsmeßgerät nach Anspruch 3, dadurch gekennzeichnet, daß der spektral selektive Lichtdetektor ein Diodenzeilenspektrometer (15) ist.

5. Remissionsmeßgerät nach mindestens einem der Ansprüche 1 bis 4, dadurch gekennzeichnet, daß Lichtquelle (11), Kondensor (12), gegebenenfalls Hohlspiegel (11a) und der optische Teil (13,14a) der Meßeinrichtung (13,14,15) in einem Gehäuse (18a) zusammengefaßt sind, das mit einem Fenster (28) ausgerüstet ist.

6. Remissionsmeßgerät nach Anspruch 5, dadurch gekennzeichnet, daß eine Referenzmeßeinrichtung (16,17) vorgesehen ist, welche von der an dem Fenster (28) reflektierten Strahlung der Lichtquelle (11) einen Ausschnitt aus der Mitte des Kernbereiches (k) aufnimmt.

7. Remissionsmeßgerät nach Anspruch 6, dadurch gekennzeichnet, daß für die Referenzmeßeinrichtung ein zweites Diodenzeilenspektrometer (17) vorgesehen ist.

8. Remissionsmeßgerät nach mindestens einem der Ansprüche 1 bis 7, dadurch gekennzeichnet, daß es vom Objekt (10) wegschwenkbar ist und daß ein Farb- oder Weißstandard (29,29a) im mittleren Abstand (d) des Objekts (10) einschwenkbar ist.

9. Remissionsmeßgerät nach mindestens einem der Ansprüche 1 bis 8, dadurch gekennzeichnet, daß als Lichtquelle (11) eine Impulslichtquelle vorgesehen ist.

10. Remissionsmeßgerät nach mindestens einem der Ansprüche 1 bis 9, dadurch gekennzeichnet, daß die zwischen der begrenzenden Fläche (14a) und dem Objekt (10) angeordnete Linse eine zusammengesetzte Linse (23) ist.

## Claims

1. A reflectance measuring apparatus for making contactless measurements, with
   - a light source (11) for illumination of an illumination area (b) on an object (10), and with
   - a measuring device (13, 14, 15) for receiving the radiation returned from a measuring area (m) on the object (10), the measuring area (m) being smaller than the illumination area (b),
   characterized thereby,
   - that the light source (11) is arranged in the focus of a condensor (12) for generating a parallel light bundle, so that caused by the width of the light source (11) the illumination intensity on the object (11) is independent of distance only within a core area (k) of the illumination area,
   - that the optical part (13, 14a) of the measuring device (13, 14, 15) comprises a limiting surface (14a) and a lens (13) arranged between the limiting surface (14a) and the object (10), so that the area of the measuring area (m) is defined, and
   - that the measuring area (m) is so defined and positioned, that it is lying within the core area (k) for all distance changes of the object (10) relative to the measuring device (13, 14, 15) within an interval.

2. The reflectance measuring apparatus of claim 1, characterized thereby, that the light source (11) is lying in the focus of a backward concave mirror additionally.

3. The reflectance measuring apparatus of claim 1 or 2, characterized thereby, that the limiting surface (14a) is the end face of a light conductor (14), which is connected to a spectrally selective light detector (15).

4. The reflectance measuring apparatus of claim 3, characterized thereby, that the spectrally selective light detector is a diode array spectrometer (15).

5. The reflectance measuring apparatus of at least one of claims 1 to 4, characterized thereby, that the light source (11), the condensor (12), if appropriate the concave mirror (11a) and the optical part (13, 14a) of the measuring device (13, 14, 15) are contained in a housing (18a) featuring a window (28).

6. The reflectance measuring apparatus of claim 5, characterized thereby, that a reference measuring device (16, 17) is comprised, which receives a section of the center of the core area (k) of the light from the light source (11) reflected at the window (18).

7. The reflectance measuring apparatus of claim 6, characterized thereby, that a second diode array spectrometer (17) is comprised for the reference measuring device.

8. The reflectance measuring apparatus of at least one of claims 1 to 7, characterized thereby, that it is pivotable away from the object (10) and that a colour or white reference (29, 29a) is pivotable in the average distance (d) of the object (10).

9. The reflectance measuring apparatus of at least one of claims 1 to 8, characterized thereby, that an impulse light source is comprised as light source (11).

10. The reflectance measuring apparatus of at least one of claims 1 to 9, characterized thereby, that the lens provided between the limiting surface (14a) and the object is a compound lens (23).

## Revendications

1. Appareil pour la mesure sans contact de la réflexion spectrale, comprenant
   - une source lumineuse (11) pour former une tache éclairée (b) sur un objet (10) et
   - un dispositif de mesure (13, 14, 15) pour détecter le rayonnement renvoyé par une aire de mesure (m) sur l'objet (10), l'aire de mesure (m) étant plus petite que la tache éclairée (b),
   caractérisé en ce que
   - la source lumineuse (1) est placée au foyer d'un condenseur (12) en vue de la production d'un faisceau lumineux parallèle, l'agencement étant tel qu'en raison de l'étendue de la source lumineuse (11), l'éclairement sur l'objet (10) est seulement indépendant de la distance à l'intérieur d'une région centrale (k) de la tache éclairée,

- la partie optique (13, 14a) du dispositif de mesure (13, 14, 15) comprend une surface de délimitation (14a) et une lentille (13) placée entre la surface de délimitation (14a) et l'objet (10), par lesquelles est fixée la grandeur de l'aire de mesure (m), et

- l'aire de mesure (m) est dimensionnée et positionnée de manière qu'elle soit située à l'intérieur de la région centrale (k) pour toutes les variations comprises dans un intervalle donné de la distance séparant l'objet (10) du dispositif de mesure (13, 14, 15).

2. Appareil de mesure de la réflexion selon la revendication 1, caractérisé en ce que la source lumineuse (11) est située en plus au foyer d'un miroir creux (11a) placé derrière elle.

3. Appareil de mesure de la réflexion selon la revendication 1 ou 2, caractérisé en ce que la surface de délimitation (14a) est la face d'entrée d'un conducteur de lumière (14), à l'autre extrémité duquel est raccordé un détecteur de lumière (15) à sélectivité spectrale.

4. Appareil de mesure de la réflexion selon la revendication 3, caractérisé en ce que le détecteur de lumière à sélectivité spectrale est un spectromètre (15) à ligne de diodes.

5. Appareil de mesure de la réflexion selon au moins une des revendications 1 à 4, caractérisé en ce que la source lumineuse (11), le condenseur (12), éventuellement le miroir creux (11a) et la partie optique (13, 14a) du dispositif de mesure (13, 14, 15) sont rassemblés dans un boîtier (18a) muni d'une fenêtre (28).

6. Appareil de mesure de la réflexion selon la revendication 5, caractérisé en ce qu'il comprend un dispositif de mesure de référence (16, 17) qui capte un fragment du milieu de la région centrale (k) dans le rayonnement de la source lumineuse (11) réfléchi sur la fenêtre (28).

7. Appareil de mesure de la réflexion selon la revendication 6, caractérisé en ce qu'un second spectromètre à ligne de diodes (17) est prévu pour le dispositif de mesure de référence.

8. Appareil de mesure de la réflexion selon au moins une des revendications 1 à 7, caractérisé en ce qu'il peut être écarté de l'objet (10) par pivotement et qu'un étalon de couleur ou un étalon blanc (29, 29a) peut être interposé par pivotement à une distance (d) moyenne de l'objet (10).

9. Appareil de mesure de la réflexion selon au moins une des revendications 1 à 8, caractérisé en ce que la source lumineuse (11) est une source lumineuse à impulsions.

10. Appareil de mesure de la réflexion selon au moins une des revendications 1 à 9, caractérisé en ce que la lentille placée entre la surface de délimitation (14a) et l'objet (10) est une lentille composée (23).

**Fig.1**

Fig. 2